# EUROPÄISCHE PATENTSCHRIFT

(11) **EP 1 719 930 B1**
(45) Veröffentlichungstag und Bekanntmachung des Hinweises auf die Patenterteilung: **27.01.2010**
(21) Anmeldenummer: 06008476.1
(22) Anmeldetag: 25.04.2006
(51) Int. Cl.: F16D 13/68

(54) **Kupplungsscheibenanordnung für eine Mehrscheibenkupplung, insbesondere Zweischeibenkupplung**
Clutch plate assembly for multiple disc clutch, especially twin-plate clutch
Ensemble de disque d'embrayage pour embrayages multiples, en particulier embrayage à deux disques

(30) Priorität: 04.05.2005 DE 102005021344
(43) Veröffentlichungstag der Anmeldung: 08.11.2006
(73) Patentinhaber: ZF Friedrichshafen AG, 88046 Friedrichshafen (DE)
(72) Erfinder: Buer, Gerald, 97172 Mühlhausen (DE); Bokisch, Winfried, 97490 Poppenhausen (DE); Kühner, Michael, 97453 Schwanfeld (DE); Müller, Thorsten, 97076 Würzburg (DE); Orlamünder, Andreas, 97422 Würzburg (DE)

(56) Entgegenhaltungen:
- DE-A1- 4 429 508
- US-A- 6 070 708

## Beschreibung

Die vorliegende Erfindung betrifft eine Mehrscheibenkupplung, insbesondere eine Zweischeibenkupplung.

In Antriebssträngen von Fahrzeugen mit vergleichsweise drehmomentenstarken Antriebsmotoren werden zunehmend zur Drehmomentübertragung zwischen dem Antriebsmotor und einem Getriebe so genannte Mehrscheibenkupplungen bzw. Zweischeibenkupplungen eingesetzt. Derartige Mehrscheibenkupplungen sind beispielsweise aus US 6 070.708 und DE 4 429 508 A1 bekannt. Derartige Kupplungen haben den Vorteil, dass sie bei vorgegebener und durch einen Kraftspeicher, wie z.B. einer Membranfeder, gelieferter Einrückkraft aufgrund der Verdopplung (Vervielfachung) der Anzahl der Reibflächen auch wesentlich höhere Drehmomente übertragen können. Bei der Durchführung von Betätigungsvorgängen in derartigen Kupplungen ist es erforderlich, der Lüftbewegung einer Anpressplatte und einer oder mehrerer Zwischenplatten folgend auch die Reibbelagbaugruppen in Richtung einer Kupplungsdrehachse bezüglich einander verlagern zu können. Dies kann beispielsweise dadurch realisiert werden, dass die verschiedenen Reibbelagbaugruppen durch voneinander separat ausgebildete Kupplungsscheiben bereitgestellt werden, die für sich jeweils dann mit einer Abtriebswelle gekoppelt sind. Da dies einen vergleichsweise großen axialen Bauraum beansprucht, besteht allgemein die Tendenz, die Reibbelagbaugruppen über eine gemeinsame Nabe an eine Abtriebswelle anzubinden, bevorzugt über eine Torsionsschwingungsdämpferanordnung, um auch im Bereich der Kupplungsscheibenanordnung die Funktion einer Schwingungsdämpfung vorsehen zu können.

Es ist die Aufgabe der vorliegenden Erfindung, eine Kupplungsscheibenan ordnung für eine Mehrscheibenkupplung, insbesondere Zweischeibenkupplung, vorzusehen, bei welcher bei möglichst geringer axialer Baugröße in einfacher Art und Weise eine Axialrelativverlagerbarkeit der verschiedenen Reibbelagbaugruppen möglich ist.

Erfindungsgemäß wird diese Aufgabe durch eine Mehrscheibenkupplung nach Anspruch 1 gelöst

Durch das Bereitstellen der Mitnehmerformation im Bereich von wenigstens einem der Deckscheibenelemente übernimmt ein derartiges Deckscheibenelement neben seiner Funktion der Drehmomenteneinleitung in der Dämpferelementenanordnung auch noch die Funktion der axial beweglichen Drehankopplung zumindest einer der Reibbelagbaugruppen. Dies führt zu einem einfachen Aufbau bei vergleichsweise geringer axialer Bauhöhe.

Um die Ausgestaltung noch weiter vereinfachen zu können, wird vorgeschlagen, dass die Mitnehmerformation mit einem Deckscheibenelement integral ausgebildet ist.

Alternativ kann vorgesehen sein, dass die Mitnehmerformation von den Deckscheibenelementen getrennt ausgebildet und mit wenigstens einem der Deckscheibenelemente fest verbunden ist. Hierbei ist es möglich, dass die Mitnehmerformation mit dem wenigstens einen Deckscheibenelement durch materialschlüssige Verbindung, vorzugsweise Verschweißung, oder/und Umformung fest verbunden ist.

Die Drehkopplung zwischen Mitnehmerformation und Gegen-Mitnehmerformation kann beispielsweise in einfacher und zuverlässiger Weise dadurch generiert werden, dass die Mitnehmerformation eine Mehrzahl von Mitnehmervorsprüngen umfasst, die in Gegen-Mitnehmeraussparungen der Gegen-Mitnehmerformation eingreifen.

Die Mitnehmervorsprünge können sich im Wesentlichen axial erstrecken. Um dabei das Zusammenfügen der Mifnehmerformation mit der Gegen-Mitnehmerformation zu erleichtern, wird vorgeschlagen, dass die Mitnehmervorsprünge in wenigstens einem ihrer axialen Endbereiche sich verjüngend ausgebildet sind.

Bei einer aus fertigungstechnischen Gründen besonders bevorzugten, da einfach zu realisierenden Ausgestaltungsform wird vorgeschlagen, dass die Mitnehmervorsprünge durch von einem scheibenförmigen Körperbereich eines Deckscheibenelements abgebogene Abschnitte gebildet sind. Dabei können die Abschnitte in Richtung auf das andere Deckscheibenelement zu gebogen sein und zur Erhöhung der Gesamtstabilität vorzugsweise auch in ihrem freien Endbereich an diesem festgelegt sein.

Um den fertigungstechnischen Aufwand bei der Herstellung insbesondere der Deckscheibenelement so gering als möglich zu halten, wird vorgeschlagen, dass die Mitnehmervorsprünge sich im Wesentlichen radial erstrecken und dass die Gegen-Mitnehmerformation im Wesentlichen axial sich erstreckende Gegen-Mitnehmervorsprünge umfasst, zwischen welchen die die Mitnehmervorsprünge aufnehmenden Gegen-Mitnehmeraussparungen vorgesehen sind. Dies minimiert die an dem Deckscheibenelement vorzunehmenden Umformungsvorgänge.

Bei einer Ausgestaltungsform, bei welcher die Mitnehmerformation nicht als integraler Bestandteil von einem der Deckscheibenelemente ausgebildet ist, wird vorgeschlagen, dass ein Mitnehmerelement vorgesehen ist, das mit wenigstens einem Deckscheibenelement fest verbunden ist und an welchem die Mitnehmerformation ausgebildet ist.

Um dabei eine stabile Anbindung an die Deckscheibenelemente zu erlangen, wird vorgeschlagen, dass das Mitnehmerelement ringartig ausgebildet ist und in einem ersten axialen Endbereich mit einem Deckscheibenelement fest verbunden ist und in einem zweiten axialen Endbereich die Mitnehmerformation aufweist. Weiterhin kann die Stabilität dadurch erhöht werden, dass das andere Deckscheibenelement Kopplungsvorsprünge aufweist, welche zwischen die Mitnehmervorsprünge an dem Mitnehmerelement eingreifen.

Die wenigstens eine der Reibbelagbaugruppen, die über eine Gegen-Mitnehmerformation an die Torsionsschwingungsdämpferanordnung bzw. die Mitnehmerformation daran angebunden werden sollen, kann beispielsweise ein vorzugsweise ringförmiges Drehkopplungselement aufweisen, an welchem die Gegen-Mitnehmerformation vorgesehen ist und Reibbeläge über eine Trägeranordnung getragen sind.

Vor allem dann, wenn eine derartige Trägeranrodnung als Belagfederung ausgebildet ist und es erstrebenswert ist, bei allen Reibbelagbaugruppen näherungsweise auch gleichartige Belagfederungen bereithalten zu können, wird vorgeschlagen, dass die Trägeranordnung mit dem Kopplungselement radial innerhalb eines Bereichs verbunden ist, in welchem der Drehkopplungseingriff der Mitnehmerformation mit der Gegen-Mitnehmerformation gebildet ist. Da es zum Bereitstellen der Axialrelativbewegbarkeit der Reibbelagbaugruppen nicht erforderlich ist, alle dieser Reibbelagbaugruppen auch axial bewegbar z. B. bezüglich der Torsionsschwingungsdämpferanordnung zu halten, wird vorgeschlagen, dass eine der Reibbelagbaugruppen mit einem Deckscheibenelement fest verbunden ist.

Die Stabilität der erfindungsgemäßen Kupplungsscheibenanordnung insbesondere im Bereich der Torsionsschwingungsdämpferanordnung kann dadurch noch erhöht werden, dass die Deckscheibenelemente durch Verbindungsorgane miteinander fest verbunden sind. Dies bedeutet also, dass unabhängig davon, ob durch irgendwelche anderen Abschnitte, beispielsweise die Mitnehmerformation, eine feste Verbindung zwischen den Deckscheibenelementen realisiert ist, diese zusätzlich auch noch durch die Verbindungsorgane miteinander fest verbunden sind, die beispielsweise als Nietbolzen oder dergleichen ausgebildet sein können und im Allgemeinen dann in einem Bereich radial innerhalb der Mitnehmerformation liegen. Derartige Verbindungsorgane können gleichzeitig auch die Funktion einer Drehwinkelbegrenzung in Zusammenwirkung mit dem Zentralscheibenelement realisieren.

Die vorliegende Erfindung betrifft ferner eine Mehrscheibenkupplung, insbesondere Zweischeibenkupplung mit einer erfindungsgemäßen Kupplungsscheibenanordnung und an einer ersten axialen Seite der Reibbelagbaugruppen einer Anpressplatte, an einer zweiten axialen Seite einer Widerlagerplatte und zwischen jeweils zwei Reibbelagbaugruppen einer Zwischenplatte.

Nachfolgend wir die Erfindung mit Bezug auf die beiliegenden Zeichnungen detailliert beschrieben. Es zeigt:
- Fig. 1: eine Teil-Längsschnittansicht einer Mehrscheibenkupplung mit einer Kupplungsscheibenanordnung;
- Fig. 2: eine Teil-Radialansicht eines eine Mitnehmerformation bereitstellenden Bereichs einer Torsionsschwingungsdämpferanordnung der Kupplungsscheibenanordnung in Fig. 1;
- Fig. 3: eine perspektivische Teil-Ansicht einer Abwandlung der in Fig. 2 gezeigten Baugruppe;
- Fig. 4: einen Rohling für ein Deckscheibenelement der in den Fig. 2 und 3 gezeigten Anordnungen;
- Fig. 5: eine der Fig. 1 entsprechende Ansicht einer alternativen Ausgestaltungsart,
- Fig. 6: eine Teil-Axialansicht, welche das Zusammenwirken einer Mitnehmerformation an einem Deckscheibenelement mit einer Gegen-Mitnehmerformation an einer Reibbelagbaugruppe darstellt;
- Fig. 7: eine der Fig. 5 entsprechende Ansicht einer weiteren abgewandelten Ausgestaltungsart;
- Fig. 8: eine Teil-Axialansicht, welche das Zusammenwirken einer Mitnehmerformation an einem Deckscheibenelement mit einer Gegen-Mitnehmerformation an einer Reibbelagbaugruppe darstellt;
- Fig. 9: eine der Fig. 5 entsprechende Ansicht einer weiteren abgewandelten Ausgestaltungsart;
- Fig. 10: eine Teil-Axialansicht eines Deckscheibenelements;
- Fig. 11: eine der Fig. 5 entsprechende Ansicht einer erfindungsgemäßen Mehrscheibenkupplung
- Fig. 12: eine Teil-Axialansicht, welche das Zusammenwirken einer Mitnehmerformation an einem Deckscheibenelement mit einer Gegen-Mitnehmerformation an einer Reibbelagbaugruppe darstellt;
- Fig. 13: eine der Fig. 5 entsprechende Ansicht einer weiteren abgewandelten Ausgestaltungsart;
- Fig. 14: eine Teil-Axialansicht, welche das Zusammenwirken einer Mitnehmerformation an einem Deckscheibenelement mit einer Gegen-Mitnehmerformation an einer Reibbelagbaugruppe darstellt;
- Fig. 15: die Anordnung der Fig. 14, geschnitten längs einer Linie XV-XV;
- Fig. 16: eine Teil-Längsschnittansicht einer weiteren alternativen Ausgestaltüngsart;
- Fig. 17: eine Teil-Radialansicht, welche den Eingriff einer Mitnehmerformation an der Torsionsschwingungsdämpferanordnung mit einer Gegen-Mitnehmerformation an einer Reibbelagbaugruppe darstellt.

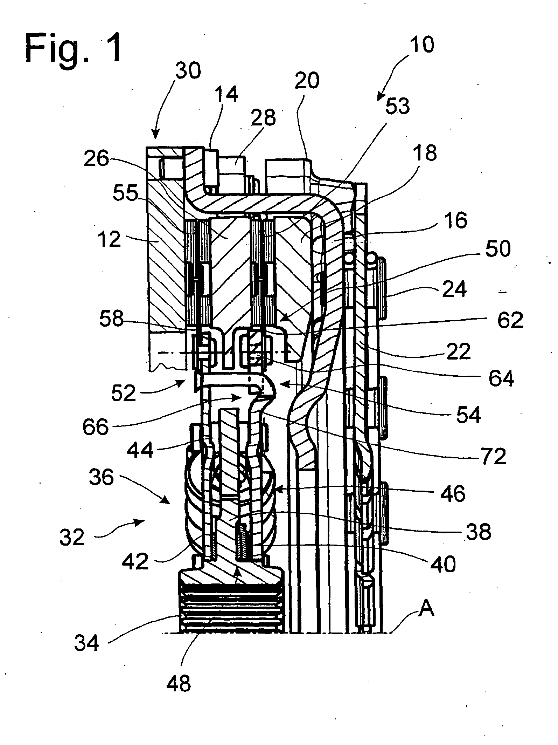

In Fig. 1 ist eine im Antriebsstrang eines Kraftfahrzeugs einsetzbare Zweischeibenkupplung allgemein mit 10 bezeichnet. Diese Zweischenkupplung 10 umfasst eine Widerlagerplatte 12, beispielsweise in Form eines Schwungrads, Zwei-Massen-Schwungrads oder dergleichen, an der über eine Mehrzahl von Schraubbolzen 14 oder dergleichen ein im Wesentlichen topfartiges Gehäuse 16 festgelegt ist. In dem zwischen dem Gehäuse 16 und der Widerlagerplatte 12 gebildeten Raumbereich ist eine Anpressplatte 18 vorgesehen, die mit über das Gehäuse 16 nach radial außen hinaus greifenden Abschnitten 20 mit einem an der Außenseite des Gehäuses 16 angeordneten Kraftspeicher 22 zusammenwirkt. Der durch Distanzbolzen 24 am Gehäuse 16 abgestützte Kraftspeicher 22 beaufschlagt die Anpressplatte 18 in ihren Abschnitten 20 und presst sie somit in Richtung auf die Widerlagerplatte 12 zu. Zwischen der Anpressplatte 18 der Widerlagerplatte 12 liegt weiterhin eine Zwischenplatte 26. Auch diese greift mit Abschnitten 28 über das Gehäuse 16 nach radial außen und ist in diesen Bereichen 28 über Tangentialblattfedem oder dergleichen sowohl an die Anpressplatte 18 als auch die Widerlagerplatte 12 angekoppelt.

Diese vorangehend beschriebenen Systemkomponenten Widerlagerplatte 12, Gehäuse 16, Kraftspeicher 22, Anpressplatte 20 und Zwischenplatte 28 bilden den wesentlichen Bereich eines an eine Antriebswelle, beispielsweise eine Kurbelwelle einer Brennkraftmaschine, anzukoppelnden Eingangsbereichs 30 der Zweischeibenkupplung 10.

Eine das in diesen Eingangsbereich 30 eingeleitete Drehmoment in Richtung zu einer Abtriebswelle, beispielsweise Getriebeeingangswelle, weiterleitende Kupplungsscheibenanordnung 32 umfasst in ihrem radial inneren Bereich eine Nabe 34. Diese ist mit einer Innenverzahnung ausgestattet und somit mit einer komplementären Verzahnung am Außenumfang einer Getriebeeingangswelle oder dergleichen zur gemeinsamen Rotation um eine Drehachse A koppelbar.

Eine Torsionsschwingungsdämpferanordnung 36 der Kupplungsscheibenanordnung 32 umfasst ein beispielsweise integral an der Nabe 34 vorgesehenes Zentralscheibenelement 38 und an beiden axialen Seiten davon jeweils ein Deckscheibenelement 40, 42. Diese beiden Deckscheibenelemente 40, 42 sind über eine Mehrzahl von in Umfangsrichtung verteilt angeordneten Bolzen 44 miteinander drehfest und axialfest verbunden. Sowohl im Zentralscheibenelement 38 als auch den Deckscheibenelementen 40, 42 sind beispielsweise durch so genannte Federfenster jeweils Abstützbereiche für die Dämpferelemente einer allgemein mit 46 bezeichneten Dämpferelementenanordnung vorgesehen. Diese Dämpferelemente, die beispielsweise als Schraubendruckfedern ausgeführt sein können, gestatten eine Relatiwerdrehbarkeit des Zentralscheibenelements 38 bezüglich der Deckscheibenelemente 40, 42 unter Kompression der Dämpferelemente, so dass im Rotationsbetrieb auftretende Drehungleichförmigkeiten aufgenommen werden können. Durch eine zwischen den Deckscheibenelementen 40, 42 und dem Zentralscheibenelement 38 wirkende Reibanordnung 48 kann bei Auftreten von Drehungleichförmigkeiten kinetische Energie in Wärme umgewandelt werden und somit dissipiert werden. Eine Relativbewegung des Zentralscheibenelements 38 bezüglich der Deckscheibenelemente 40, 42 ist durch das Zusammenwirken der radial äußeren Bereiche des Zentralscheibenelements 38 mit den Bolzen 44 begrenzt, so dass eine Überlastung der Dämpferelemente der Dämpferelementenanordnung 46 nicht auftreten kann.

Die Kupplungsscheibenanordnung 32 dieser Zweischeibenkupplung 10 umfasst zwei Reibbelagbaugruppen 50, 52. Jede dieser Reibbelagbaugruppen 50, 52 umfasst in ihrem radial äußeren Bereich Reibbeläge 53, 55, wobei die Reibbeläge 53 der Reibbelagbaugruppe 50 zwischen der Anpressplatte 18 und der Zwischenplatte 26 liegen, während die Reibbeläge 55 der Reibbelagbaugruppe 52 zwischen der Zwischenplatte 26 und der Widerlagerplatte 12 liegen. Die Reibbeläge 55 der Reibbelagbaugruppe 52 sind über eine Trägeranordnung 58, die beispielsweise durch eine Belagfederung bereitgestellt sein kann, mit dem radial äußeren Bereich des Deckscheibenelements 42 durch Vernietung fest verbunden. Auf diese Art und Weise ist die Reibbelagbaugruppe 52 mit der Torsionsschwingungsdämpferanordnung 36 und auch der Nabe 34 nicht nur drehfest gekoppelt, sondern auch axial fest verbunden.

Da zum Ausrücken der Zweischeibenkupplung 10 es grundsätzlich nicht nur erforderlich ist, die Apressplatte 18 und die Zwischenplatte 26 voneinander weg zu bewegen und auch die Zwischenplatte 26 von der Widerlagerplatte 12 weg zu bewegen, sondern es weiterhin erforderlich ist, eine axiale Relativbewegung zwischen den beiden Reibbelagbaugruppen 50, 52 zu ermöglichen, um den Reibeingriff der Reibbeläge 53 und 55 mit der Zwischenplatte 26 aufheben oder mindern zu können, ist die Reibbelagbaugruppe 50 nicht axial fest an die Torsionsschwingungsdämpferanordnung 36 angebunden. Vielmehr ist, wie im Folgenden dargelegt, dafür gesorgt, dass zwar eine drehfeste Ankopplung dieser Reibbelagbaugruppe 50 an die Torsionsschwingungsdämpferanordnung 36 und über diese an die Nabe 34 realisiert ist, dass jedoch die Reibbelagbaugruppe 50 axial bezüglich der Torsionsschwingungsdämpferanordnung 36 und somit auch der damit fest verbundenen Reibbelagbaugruppe 52 verschoben werden kann.

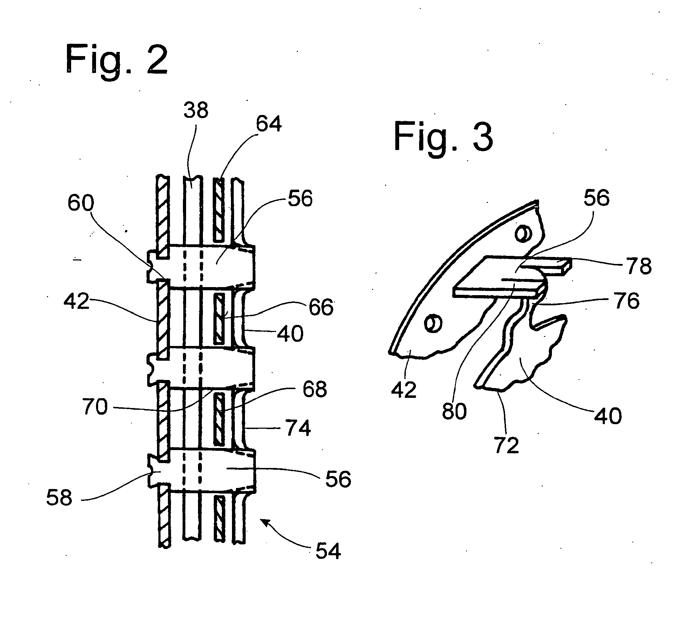

Um dies zu realisieren, ist an der Torsionsschwingungsdämpferanordnung 36 bzw. dem Deckscheibenelement 40 eine Mitnehmerformation 54 vorgesehen. Diese umfasst, wie auch in der Darstellung der Fig. 2 erkennbar, am radial äußeren Bereich des Deckscheibenelements 40 eine Mehrzahl von in Umfangsrichtung mit gegenseitigem Abstand zueinander angeordneten und axial abgebogenen Mitnehmervorsprüngen 56. Diese Mitnehmervorsprünge 56 erstrecken sich auf das andere Deckscheibenelement 42 zu und überbrücken somit das Zentralscheibenelement 38 an seiner radialen Außenseite. Im Bereich ihrer freien Enden weisen die Mitnehmervorsprünge 56 Verbindungsabschnitte 58 auf, welche zugehörige Öffnungen 60 im anderen Deckscheibenelement 42 durchsetzen und durch Verstemmen so verformt sind, dass eine feste formschlüssige Verbindung zwischen den Mitnehmervorsprüngen 56 und dem Deckscheibenelement 42 realisiert ist, wobei diese feste, formschlüssige Verbindung in einem Bereich radial innerhalb der Verbindung des Deckscheibenelements 42 mit der Trägeranordnung 58 der Reibbelagbaugruppe 52 angeordnet ist.

Die Reibbelagbaugruppe 50 weist, ähnlich wie die Reibbelagbaugruppe 52, eine Trägeranordnung 62, beispielsweise wiederum in Form einer Belagfederung auf, die mit einem ringartigen Kopplungselement 64 beispielsweise durch Vernietung fest verbunden ist. Dieses ringartige Kopplungselement 64 ist grundsätzlich derartig dimensioniert und positioniert, dass es das Deckscheibenelement 40 an seiner radialen Außenseite umgibt. An dem Kopplungselement 64 ist eine Gegen-Mitnehmerformation 66 vorgesehen, die eine Mehrzahl von sich im Wesentlichen nach radial innen erstreckenden Gegen-Mitnehmervorsprüngen 68 mit dazwischen liegenden Gegen-Mitnehmeraussparungen 70 bildet. Man erkennt in Fig. 2, dass die Mitnehmervorsprünge 56 und die Gegen-Mitnehmervorsprünge 58 miteinander eingreifen, so dass die Mitnehmervorsprünge 56 in den Gegen-Mitnehmeraussparungen 70 zu liegen kommen. Dabei ist vorzugsweise dieser Eingriff möglichst spielfrei. Da die Mitnehmervorsprünge 56 sich in axialer Richtung erstreckend ausgebildet sind, ist auf diese Art und Weise auch bei hergestelltem Drehkopplungseingriff zwischen der Mitnehmerformation 54 und der Gegen-Mitnehmerformation 66 eine Axialbewegbarkeit der Reibbelagbaugruppe 50 realisiert.

Um das Zusammenfügen der Kupplungsscheibenanordnung 32 zu erleichtern, ist es beispielsweise möglich, wie durch strichlierte Linien in Fig. 2 angedeutet, die Mitnehmervorsprünge 56 in einem ihrer axialen Endbereiche sich verjüngend auszubilden, um somit Einführschrägen für die Gegen-Mitnehmervorsprünge 68 vorzusehen. Weiterhin ist in demjenigen Bereich, in welchem die Gegen-Mitnehmervorsprünge 56 an den scheibenartigen Körperbereich 72 des Deckscheibenelements 40 anschließen, durch entsprechende Abkrümmung dafür gesorgt, dass die zwischen den Mitnehmervorsprüngen 56 gebildeten Aussparungen 74 sich so weit nach radial innen erstrecken, dass die Gegen-Mitnehmerformation 66 axial aufgeschoben werden kann. Weiterhin erkennt man in Fig. 1, dass in seinem radial äußeren Bereich der Körperbereich 72 des Deckscheibenelements 40 bzw. die Mitnehmervorsprünge 56 zunächst axial in Richtung von dem anderen Deckscheibenelement 42 weg gekrümmt und erst dann in Richtung auf dieses zu gekrümmt sind. Auf diese Art und Weise kann die axiale Erstreckungslänge zur verbesserten Wechselwirkung der Reibbelagbaugruppe 50 mit dem Deckscheibenelement 40 verlärigert werden.

Eine Abwandlung hierzu ist in Fig. 3 dargestellt. Man erkennt den radial äußeren Bereich der Deckscheibenelemente 40, 42 und die vom Deckscheibenelement 40 axial abgebogenen Mitnehmervorsprünge 56. Diese sind in einem in Umfangsrichtung zentralen Abschnitt 76 an den Körperbereich 72 des Deckscheibenelements 40 materialschlüssig bzw. integral angebunden und weisen beidseits dieses auch gekrümmt verlaufenden Abschnitts 76 sich im Wesentlichen geradlinig axial erstreckende Abschnitte 78, 80 auf, welche die Wechselwirkungslänge für die Gegen-Mitriehmerformation 60 in axialer Richtung deutlich verlängern.

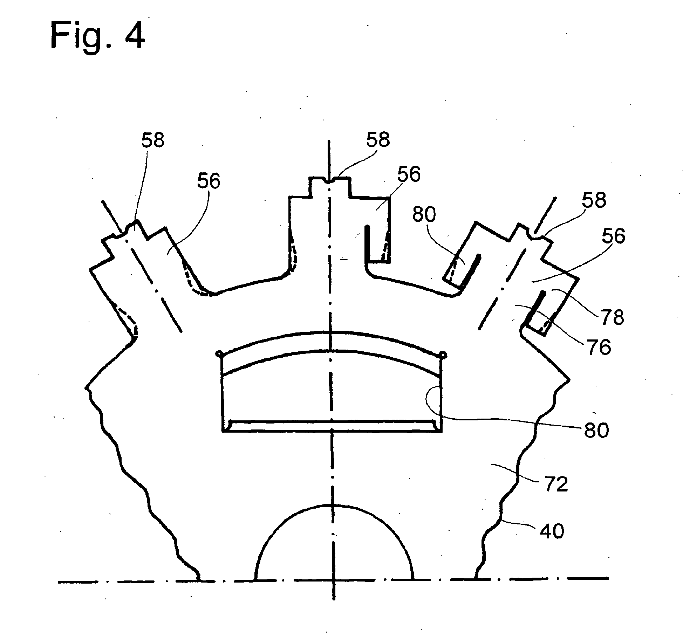

In Fig. 4 ist ein Rohling für ein derartiges Deckscheibenelement 40 dargestellt, wobei in der linken Hälfte der Fig. 4 ein Rohling für die Ausgestaltungsvariante gemäß Fig. 2 gezeigt ist, während in der rechten Hälfte ein Rohling für die Ausgestaltungsvariante gemäß Fig. 3 gezeigt ist. Man erkennt in dem Körperbereich 72 eines der Federfenster 80 für die Dämpferelementenanordnung 46, und man erkennt die in dem Rohling sich noch nach radial außen erstreckenden Mitnehmervorsprünge 56. Dieser Rohling kann durch ausschneiden oder ausstanzen aus Blechmaterial erhalten werden und dann durch Biegen in die in Fig. 2 bzw. Fig. 3 gezeigte Form gebracht werden. Man erkennt weiter in Fig. 4 durch Strichlinie jeweils eine alternative Führung der Außenumfangskontur zum Bereitstellen der sich in axialer Richtung verjüngenden Mitnehmervorsprünge 56.

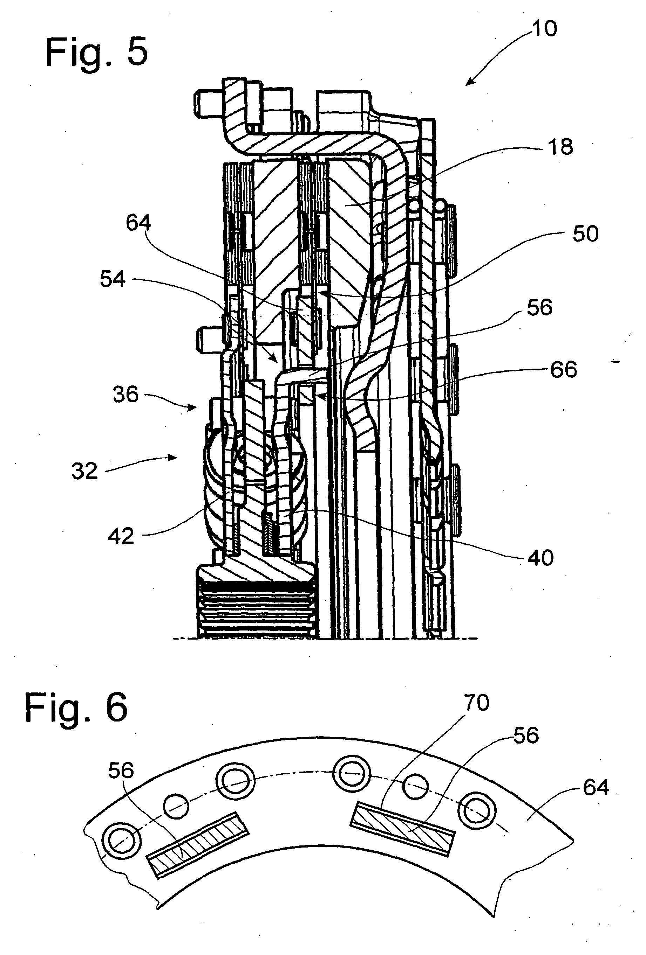

Die Fig. 5 und 6 zeigen eine alternative Ausgestaltungsart, wobei hier Unterschiede im Wesentlichen in der Ausgestaltung der Mitnehmerformation und der Gegen-Mitnehmerformation bestehen. Es wird daher im Folgenden im Wesentlichen auch nur auf die Unterschiede eingegangen. Der verbleibende Aufbau der Mehrscheibenkupplung 10 entspricht dem vorangehend Beschriebenen, so dass auf diese Ausführung verwiesen werden kann.

Man erkennt in Fig. 5, dass an dem Deckscheibenelement 40 wieder in seinem radial äußeren Bereich die Mitnehmerformation 54 durch eine Mehrzahl von axial abgebogenen Mitnehmervorsprüngen 56 realisiert ist. Diese sind jedoch nunmehr in Richtung vom Deckscheibenelement 42 weg gebogen und erstrecken sich somit in Richtung auf die Anpressplatte 18 zu.

In dem Kopplungselement 64 der Reibbelagbaugruppe 50 sind an den axial abgebogenen Mitnehmervorsprüngen 56 entsprechenden Umfangspositionen langlochartig die Gegen-Mitnehmeraussparungen 70 ausgebildet, in welche die Mitnehmervorsprünge 56 mit möglichst geringem Bewegungsspiel eingreifen.

Auch hier ist also in einfacher Art und Weise eine Axialbewegbarkeit der Reibbelagbaugruppe 50 bezüglich der Torsionsschwingungsdämpferanordnung 36 der Kupplungsscheibenanordnung 32 realisiert, wobei gleichzeitig durch Zusammenwirken der Mitnehmervorsprünge 56 mit den Gegen-Mitnehmeraussparungen 70 eine Umfangs- bzw. Radialzentrierung der Reibbelagbaugruppe 50 realisiert ist.

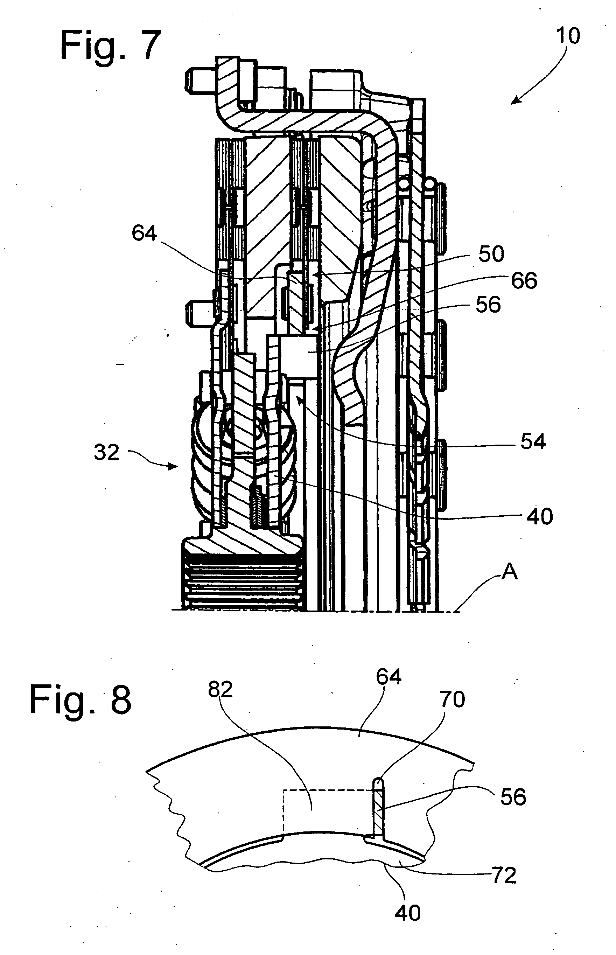

In den Fig. 7 und 8 ist eine Ausgestaltungsvariante gezeigt, bei welcher die Mitnehmervorsprünge 56 wiederum axial vom Deckscheibenelement 40 abstehen. Ein Unterschied besteht nunmehr darin, dass die Biegelinie, um welche die Mitnehmervorsprünge 56 bezüglich des Körperbereichs 72 des Deckscheibenelements 40 abgebogen bzw. gekrümmt sind, sich nicht, wie in den vorangehend beschriebenen Ausgestaltungsformen näherungsweise in Umfangsrichtung oder tangential erstreckt, sondern sich im Wesentlichen in radialer Richtung, ggf. auch mit einer Umfangsneigungskomponente, erstreckt. Hierzu sind, wie der Darstellung der Fig. 8 zu entnehmen, an den Körperbereich 72 nach radial außen anschließend Abschnitte 82 vorgesehen, die zunächst in Umfangsrichtung sich weg erstreckende und nicht weiter an den Körperbereich 72 angebundene Lappen aufweisen, welche nachfolgend um die näherungsweise in radialer Richtung sich erstreckende Biegelinie umgebogen werden, so dass die sich im Wesentlichen axial erstreckenden Mitnehmervorsprünge 56 erhalten werden. In Zuordnung zu diesen sich auch von radial innen nach radial außen erstreckenden Mitnehmervorsprüngen 56 sind an dem Kopplungselement 64 der Reibbelagbaugruppe 50 mit entsprechender Radialerstreckung, also primär von radial außen nach radial innen, sich erstreckende Gegen-Mitnehmeraussparungen 70 vorgesehen, in welche die Mitnehmervorsprünge 56 eingreifen.

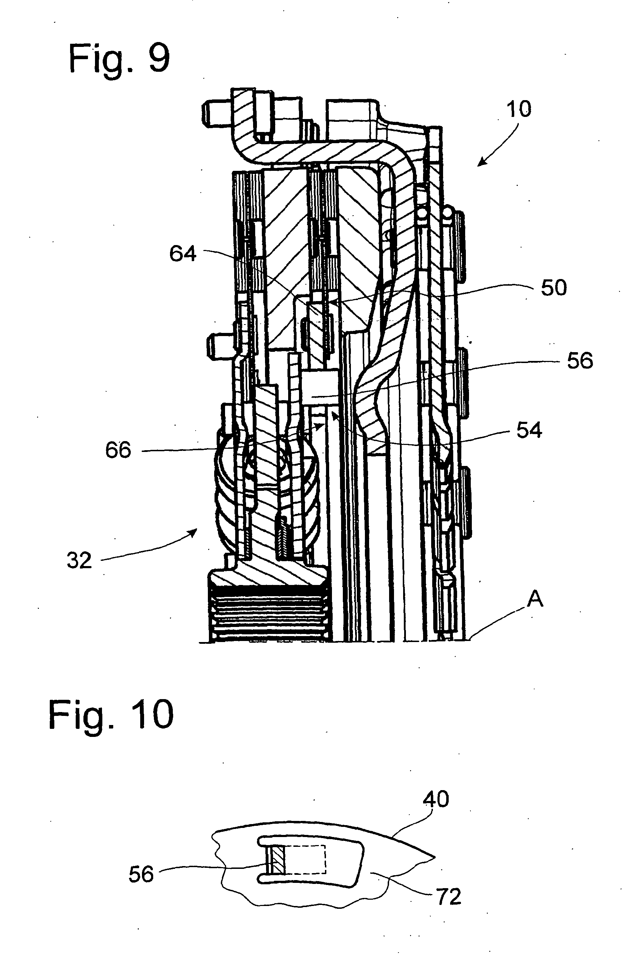

Eine Abwandlung hierzu ist in den Fig. 9 und 10 dargestellt. Man erkennt, dass die Mitnehmervorsprünge 56, die wiederum um eine näherungsweise radial sich erstreckende Biegelinie bezüglich des Körperbereichs 72 abgebogen sind, nicht an nach radial außen liegenden Verlängerungen des Körperbereichs 72 vorgesehen sind, sondern dass durch Bereitstellen U-förmiger Ausstanzungen die zunächst in Umfangsrichtung sich erstreckenden und in Fig. 10 mit Strichlinie eingezeichneten Lappen vorhanden sind, die dann zum Bereitstellen der näherungsweise axial sich erstreckenden Mitnehmervorsprünge 56 aus der Ebene des Körperbereichs 72 herausgebogen werden.

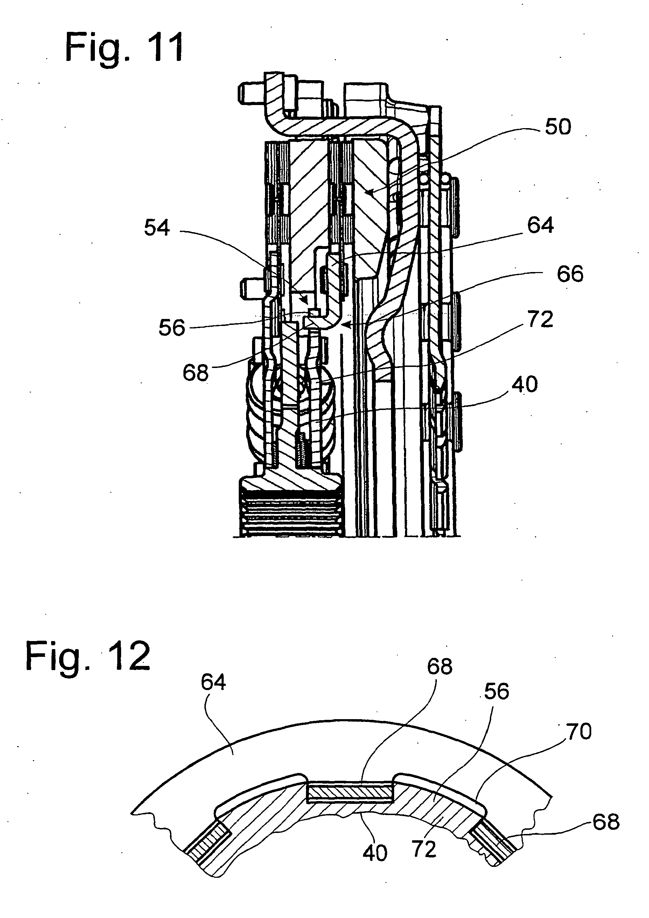

In den Fig. 11 und 12 ist eine erfinderische Ausgestaltungsvariate gezeigt, bei welcher die am Deckscheibenelement 40 vorgesehene Mitnehmerformation 54 durch sich im Wesentlichen radial erstreckende und bezüglich des Körperbereichs 72 nicht abgebogene Mitnehmervorsprünge 56 bereitgestellt ist. In entsprechender Weise ist am Kopplungselement 64 der Reibbelagbaugruppe 50 radial innen die Gegen-Mitnehmerformation 66 durch eine Mehrzahl von nunmehr axial abgebogenen Gegen-Mitnehmervorsprüngen 68 bereitgestellt, zwischen welchen die in Fig. 12 auch erkennbaren Gegen-Mitnehmeraussparungen 70 gebildet sind. In diese Gegen-Mitnehmeraussparungen 70 greifen die nach radial außen sich erstreckenden Mitnehmervorsprünge 56 ein. Dabei sind vorzugsweise die Mitnehmervorsprünge 56, so wie in Fig. 12 dargestellt, in Richtung nach radial außen und in Umfangsrichtung sich erweiternd ausgebildet, um einen stabilen Eingriff mit den Gegen-Mitnehmervorsprüngen 68 zu erlangen. Ferner ist durch die Wechselwirkung der Mitnehmerformation 54 mit der Gegen-Mitnehmerformation 66 auch für eine Zentrierung der Reibbelagbaugruppe 50 gesorgt.

Vorangehend sind Ausgestaltungsformen beschrieben worden, bei welchen die an der Torsionsschwingungsdämpferanordnung vorgesehene Mitnehmerformation durch entsprechende Formgebung und Ausgestaltung von einem der Deckscheibenelemente bereitgestellt ist. Nachfolgend werden Ausgestaltungsformen beschrieben, bei welchen diese Mitnehmerformation zwar weiterhin im Bereich der oder von einem der Deckscheibenelemente vorgesehen ist, jedoch durch eine separate Baugruppe realisiert ist, die dann an zumindest einem dieser Deckscheibenelemente festgelegt ist.

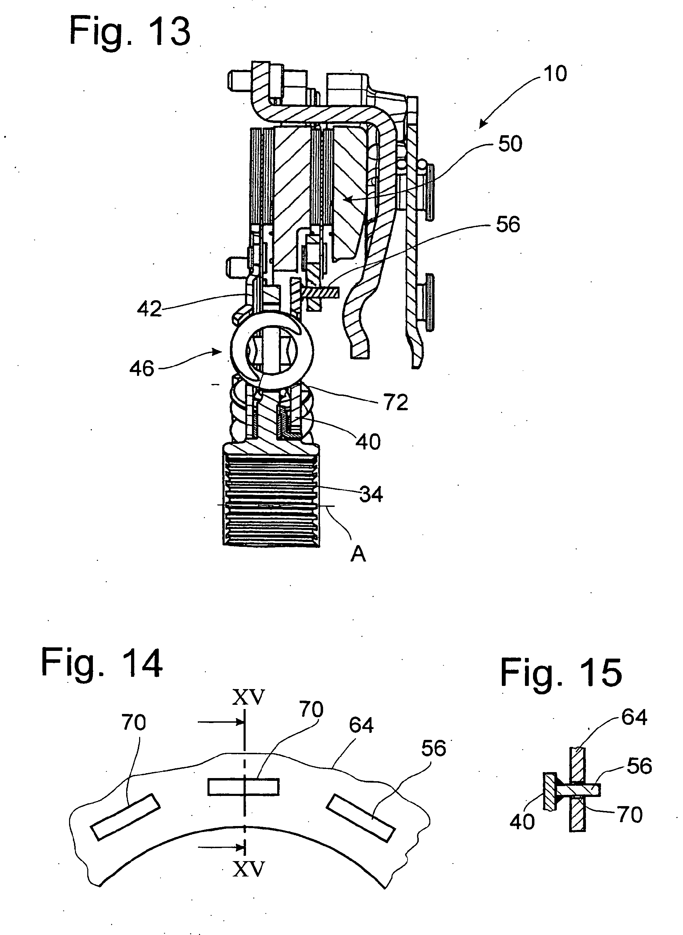

In den Fig. 13 bis 15 ist eine erste derartige Ausgestaltungsvariante dargestellt. Man erkennt, dass an dem Deckscheibenelement 40 bzw. dem scheibenartigen Körperbereich 72 desselben im radial äußeren Bereich, also radial außerhalb der Dämpferelementenanordnung 46, in Umfangsrichtung aufeinander folgend mehrere Mitnehmervorsprünge 56 als separate Bauteile festgelegt sind. Dies kann beispielsweise durch Anschweißen von die Mitnehmervorsprünge 56 bereitstellenden und sich näherungsweise in tangentialer und axialer Richtung erstreckenden Plattenteilen erfolgen. In Zuordnung dazu ist in dem Kopplungselement 64 der Reibbelagbaugruppe 50 wieder eine Mehrzahl von in Umfangsrichtung bzw. tangentialer Richtung sich erstreckenden Gegen-Mitnehmeraussparungen 70 vorgesehen, in welche die Mitnehmervorsprünge 56 axial eingreifen. Hier ist also grundsätzlich eine der Ausgestaltungsform der Fig. 5 und 6 sehr ähnliche Anordnung geschaffen, bei der jedoch die Mitnehmervorsprünge 56 keinen integralen Bestandteil des Deckscheibenelements 40 bilden, sondern daran festgelegt sind.

Es sei darauf hingewiesen, dass selbstverständlich die separat ausgebildeten Mitnehmervorsprünge 56 nicht oder nicht nur durch Verschweißung am Deckscheibenelement 40 festgelegt werden können, sondern dass die Verbindung beispielsweise auch so realisiert sein kann, wie die Verbindung der Mitnehmervorsprünge 56 mit dem Deckscheibenelement 42 der in Fig. 1 dargestellten Ausgestaltungsform.

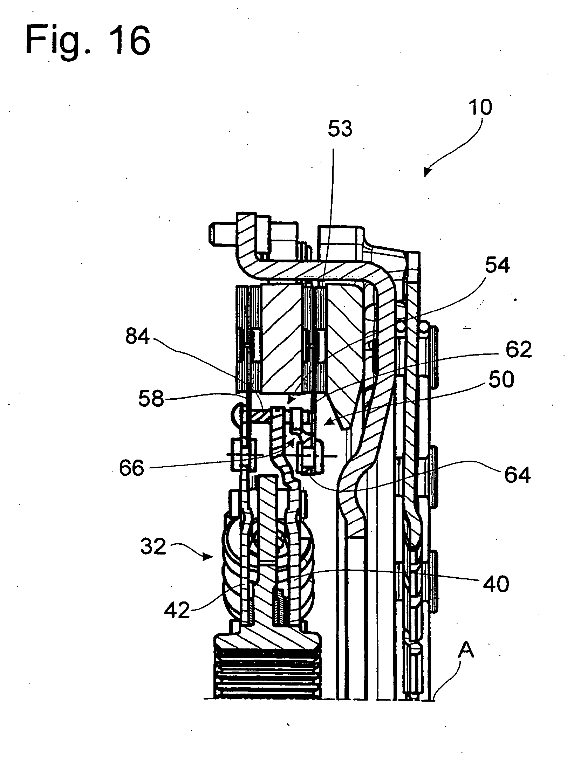

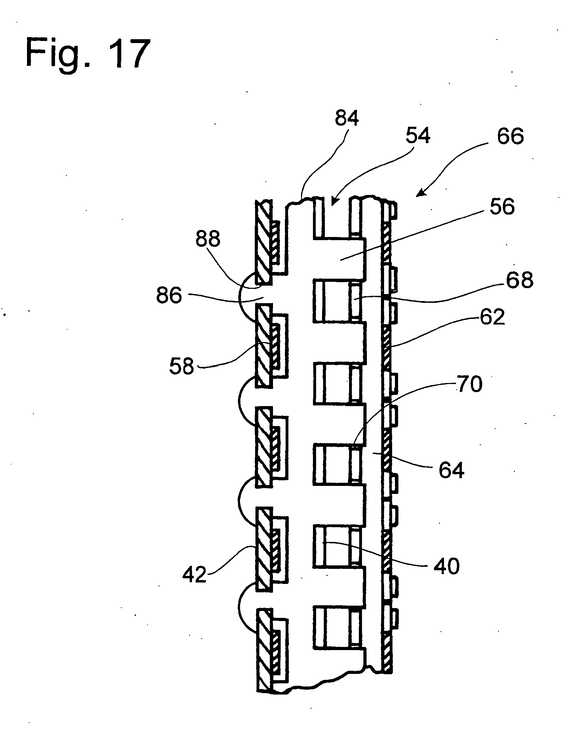

Eine weitere alternative Ausgestaltungsform ist in den Fig. 16 und 17 gezeigt. Hier ist wiederum dafür gesorgt, dass die Mitnehmerformation 54 nicht integraler Bestandteil von einem der Deckscheibenelemente 40 oder 42 ist. Vielmehr ist ein ringartiges Mitnehmerelement 84 vorgesehen, das im radial äußeren Bereich mit den Deckscheibenelementen 40, 42 verbunden ist. Hierzu weist das ringartige Mitnehmerelement 84 an einem axialen Endbereich Vorsprünge 86 auf, die Öffnungen 88 im Deckscheibenelement 42 durchsetzen und umgeformt sind, dass eine formschlüssige Halterungswirkung erlangt ist. Man erkennt dabei in den Fig. 16 und 17, dass die Trägeranordnung 58 der Reibbelagbaugruppe 52 radial innerhalb dieser festen Verbindung zwischen dem Deckscheibenelement 42 und dem Mitnehmerelement 84 an dem Deckscheibenelement 42 festgelegt ist. In dem anderen axialen Endbereich weist das Mitnehmerelement 84 die Mitnehmerformation 54 in Form mehrerer sich im Wesentlichen axial erstreckender Mitnehmervorsprünge 56 auf. Zwischen diese Mitnehmervorsprünge 56 greifen nach radial außen sich erstreckende Kopplungsvorsprünge 90 des Deckscheibenelements 40 ein, und zwar im Wesentlichen ohne Bewegungsspiel, so dass ggf. hier sogar eine Presspassung realisiert sein kann. Auf diese Art und Weise kann auch eine feste Halterung des Deckscheibenelements 40 an dem Mitnehmerelement 84 realisiert sein. Die Mitnehmervorsprünge 56 erstrecken sich über das Deckscheibenelement 40 axial hinaus zur Kopplung mit der Gegen-Mitnehmerformation 66 an dem Kopplungselement 64 der Reibbelagbaugruppe 50. Man erkennt in Fig. 16, dass dieses ringartige Kopplungselement 64 nunmehr so angeordnet ist, dass es im Wesentlichen radial innerhalb des ringartigen Mitnehmerelements 84 liegt und die Gegen-Mitnehmerformation 66 mit ihren Gegen-Mitehmervorsprüngen 68 sich im Wesentlichen nach radial außen erstreckt. Auf diese Art und Weise ist dafür gesorgt, dass die feste Verbindung der Trägeranordnung 62 der Reibbeläge 53 der Reibbelagbaugruppe 50 mit dem Kopplungselement 64 in einem radialen Bereich erfolgt, in dem auch die Trägeranordnung 58 mit dem Deckscheibenelement 42 verbunden ist. Das heißt, beide Trägeranordnungen 58, 62 können im Wesentlichen zueinander gleich ausgestaltet sein, so dass sich bei Realisierung derselben als Belagfederung auch ein im Wesentlichen gleiches Belagfederungsverhalten ergibt. Es ist selbstverständlich, dass eine derartige Ausgestaltung der Reibbelagbaugruppe 50, bei welcher die Verbindung der Trägeranordnung mit dem Kopplungselement radial innerhalb desjenigen Bereichs angeordnet ist, in welchem die Drehkopplungsverbindung zwischen der Mitnehmerformation 54 und der Gegen-Mitnehmerformation 66 realisiert ist, auch bei den anderen vorangehend beschriebenen Ausgestaltungsformen realisiert sein kann.

## Patentansprüche

1. Mehrscheibenkupplung, insbesondere Zweischeibenkupplung, umfassend
- eine Wiederlagerplatte (12),
- ein Gehäuse (16), festgelegt an der Wiederlagerplatte (12),
- eine Anpressplatte (18) und eine Zwischenplatte (26), über Tangentialblatffedern angekoppelt
- einen Kraftspeicher (22) zur Beaufschlagung der Anpressplatte (18) in Richtung der Wiederlagerplatte (12)
- eine Kupplungsscheibenanordnung (32) mit einer Mehrzahl von Reibbelagbaugruppen (50, 52), welche über eine Torsionsschwingungsdämpferanordnung (36) mit einer Nabe (34) verbunden sind, wobei die Torsionsschwingungsdämpferanordnung (36) ein Zentralscheibenelement (38) an der Nabe (34) und beidseits davon Deckscheibenelemente (40, 42) umfasst, wobei die Deckscheibenelemente (40, 42) miteinander fest verbunden sind und über eine Dämpferelementenanordnung (46) zur Drehmomentübertragung mit dem Zentralscheibenelement (38) gekoppelt sind, wobei die Reibbelagbaugruppe (52) mit dem einen Deckscheibenelement (42) axial fest verbunden und die Reibbelagbaugruppe (50) axial bezüglich der Reibbelagbaugruppe (52) verschoben werden kann, wobei an dem anderen Deckscheibenelement (40) eine Mitnehmerformation (54) vorgesehen ist, die als sich im wesentlichen radial erstreckende Mitnehmervorsprünge (56) von diesem Deckscheibenelement (40) bereit gestellt ist, mit welcher eine durch eine Mehrzahl axial abgebogener Gegen-Mitnahmevorsprüngen 68 gebildeten Gegen-Mitnehmerformation (66) an der Reibbelagbaugruppe (50) in eine Verschiebung dieser Reibbelagbaugruppe in Richtung einer Kupplungsscheibendrehachse (A) zulassendem Drehkopplungseingriff steht.

2. Mehrscheibenkupplung nach Anspruch 1, **dadurch gekennzeichnet, dass** durch die Wechselwirkung der Mitnehmerformation (54) mit der Gegen-Mitnehmerformation (66) die Reibbelagbaugruppe (50) zentriert wird.

3. Mehrscheibenkupplung nach Anspruch 1, **dadurch gekennzeichnet, dass** der Kraftspeicher (22) über Distanzbolzen (24) am Gehäuse (16) abgestützt ist.

4. Mehrscheibenkupplung nach Anspruch 1, **dadurch gekennzeichnet, dass** das Gehäuse topfartig ausgebildet ist

5. Mehrscheibenkupplung nach Anspruch 1, **dadurch gekennzeichnet, dass** an der Zwischenplatte (26) radial außen Abschnitte (28) ausgebildet sind, über die diese über Tangentialblattfedern angekoppelt ist.

6. Mehrscheibenkupplung nach Anspruch 1, **dadurch gekennzeichnet, dass** die Zwischenplatte (26) an der Wiederlagerplatte (12) angekoppelt ist.

7. Mehrscheibenkupplung nach Anspruch 1, **dadurch gekennzeichnet, dass** die Wiederlagerplatte ein Zwei-Massen-Schwungrad ist

8. Mehrscheibenkupplung nach Anspruch 1, **dadurch gekennzeichnet, dass** die Mitnehmervorsprünge (56) in Richtung nach radial außen und in Umfangsrichtung sich erweiternd ausgebildet sind.

9. Mehrscheibenkupplung nach Anspruch 1, **dadurch gekennzeichnet, dass** zwischen den Gegen-Mitnehmervorsprüngen (68) Gegen-Mitnehmeraussparungen (70) gebildet sind, in die die Mitnehmervorsprünge (56) eingreifen

10. Mehrscheibenkupplung nach Anspruch 1, **dadurch gekennzeichnet, dass** das Gehäuse topfartig ausgebildet ist.

## Claims

1. Multiplate clutch, in particular double-plate clutch, comprising
- an abutment plate (12),
- a housing (16), fixed on the abutment plate (12),
- a pressure plate (18) and an intermediate plate (26), coupled via tangential leaf springs,
- a force accumulator (22) for loading the pressure plate (18) in the direction of the abutment plate (12),
- a clutch-plate arrangement (32) having a plurality of friction-lining assemblies (50, 52) which are connected to a hub (34) via a torsional vibration-damper arrangement (36), the torsional vibration-damper arrangement (36) comprising a central plate element (38) on the hub (34) and covering-plate elements (40, 42) on both sides of it, the covering-plate elements (40, 42) being connected fixedly to one another and being coupled to the central plate element (38) via a damper-element arrangement (46) for torque transmission, it being possible for the friction-lining assembly (52) to be connected axially fixedly to one covering-plate element (42) and it being possible for the friction-lining assembly (50) to be displaced axially with regard to the friction-lining assembly (52), a driver formation (54) being provided on the other covering-plate element (40), which driver formation (54) is provided as substantially radially extending driver projections (56) from the said covering-plate element (40), with which a mating driver formation (66) on the friction-lining assembly (50) is in rotary coupling engagement permitting a displacement of the said friction-lining assembly in the direction of a clutch-plate rotational axis (A), which mating driver formation (66) is formed by a plurality of axially bent-away mating driver projections (68).

2. Multiplate clutch according to Claim 1, **characterized in that** the friction-lining assembly (50) is centred by the interaction of the driver formation (54) with the mating driver formation (66).

3. Multiplate clutch according to Claim 1, **characterized in that** the force accumulator (22) is supported on the housing (18) via spacer bolts (24).

4. Multiplate clutch according to Claim 1, **characterized in that** the housing is of pot-like configuration.

5. Multiplate clutch according to Claim 1, **characterized in that** sections (28) are formed on the intermediate plate (26) radially to the outside, via which sections (28) the said intermediate plate (26) is coupled via tangential leaf springs.

6. Multiplate clutch according to Claim 1, **characterized in that** the intermediate plate (26) is coupled to the abutment plate (12).

7. Multiplate clutch according to Claim 1, **characterized in that** the abutment plate is a two-mass flywheel.

8. Multiplate clutch according to Claim 1, **characterized in that** the driver projections (56) are configured such that they widen radially to the outside and in the circumferential direction.

9. Multiplate clutch according to Claim 1, **characterized in that** mating driver cut-outs (70), into which the driver projections (56) engage, are formed between the mating driver projections (68).

10. Multiplate clutch according to Claim 1, **characterized in that** the housing is of pot-like configuration.

## Revendications

1. Embrayage multidisques, notamment embrayage à deux disques, comprenant :
- une plaque de butée (12),
- un boîtier (16), fixé à la plaque de butée (12),
- une plaque de pression (18) et une plaque intermédiaire (26), accouplées par le biais de ressorts à lames tangentiels,
- un accumulateur de force (22) pour solliciter la plaque de pression (18) dans la direction de la plaque de butée (12),
- un agencement de disques d'embrayage (32) avec une pluralité de modules de garnitures de friction (50, 52) qui sont connectés par le biais d'un agencement d'amortissement des oscillations de torsion (36) à un moyeu (34), l'agencement d'amortissement des oscillations de torsion (36) comprenant un élément de disque central (38) sur le moyeu (34) et de part et d'autre de celui-ci, des éléments de disques de recouvrement (40, 42), les éléments de disques de recouvrement (40, 42) étant connectés fixement les uns aux autres, et étant accouplés par le biais d'un agencement d'éléments d'amortissement (46) pour le transfert de couple à l'élément de disque central (38), le module de garniture de friction (52) étant connecté fixement axialement à l'un (42) des éléments de disques de recouvrement, et le module de garniture de friction (50) pouvant être déplacé axialement par rapport au module de garniture de friction (52), une formation d'entraînement (54) étant prévue sur l'autre élément de disque de recouvrement (40), qui est prévue sous forme de saillies d'entraînement (56) s'étendant essentiellement radialement depuis cet élément de disque de recouvrement (40), avec laquelle une formation d'entraînement conjuguée (66), formée par une pluralité de saillies d'entraînement conjuguées cintrées axialement (68) au niveau du module de garniture de friction (50), vient en prise par accouplement rotatif permettant un déplacement de ce module de garniture de friction dans la direction d'un axe de rotation des disques d'embrayage (A).

2. Embrayage multidisques selon la revendication 1, **caractérisé en ce que** grâce à l'interaction de la formation d'entraînement (54) avec la formation d'entraînement conjuguée (66), le module de garniture de friction (50) est centré.

3. Embrayage multidisques selon la revendication 1, **caractérisé en ce que** l'accumulateur de force (22) est supporté sur le boîtier (16) par le biais de boulons d'espacement (24).

4. Embrayage multidisques selon la revendication 1, **caractérisé en ce que** le boîtier est réalisé en forme de pot.

5. Embrayage multidisques selon la revendication 1, **caractérisé en ce que** des portions (28) sont réalisées radialement à l'extérieur sur la plaque intermédiaire (26), lesquelles permettent de raccorder cette dernière par le biais de ressorts à lame tangentiels.

6. Embrayage multidisques selon la revendication 1, **caractérisé en ce que** la plaque intermédiaire (26) est raccordée à la plaque de butée (12).

7. Embrayage multidisques selon la revendication 1, **caractérisé en ce que** la plaque de butée est une roue volante à deux masses.

8. Embrayage multidisques selon la revendication 1, **caractérisé en ce que** les saillies d'entraînement (56) sont réalisées en s'élargissant dans la direction radialement extérieure et dans la direction périphérique.

9. Embrayage multidisques selon la revendication 1, **caractérisé en ce qu'**entre les saillies d'entraînement conjuguées (68) sont formés des évidements d'entraînement conjugués (70) dans lesquels viennent en prise les saillies d'entraînement (56).

10. Embrayage multidisques selon la revendication 1, **caractérisé en ce que** le boîtier est réalisé en forme de pot.
